(19) Europäisches Patentamt / European Patent Office / Office européen des brevets

(11) **EP 1 895 157 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
*F03D 7/02* *(2006.01)*      *F03D 7/04* *(2006.01)*
*F03D 9/00* *(2006.01)*      *F03D 9/02* *(2006.01)*
*F03D 11/02* *(2006.01)*

(21) Anmeldenummer: 07014850.7

(22) Anmeldetag: **28.07.2007**

(54) **Verfahren zum Betrieb einer Windenergieanlage mit einem Synchrongenerator und einem Überlagerungsgetriebe**

Method for operating a wind farm with a synchronous generator and an overriding drive

Procédé destiné au fonctionnement d'une éolienne dotée d'un générateur synchrone et d'une boîte de vitesse

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.08.2006 DE 102006040929**

(43) Veröffentlichungstag der Anmeldung:
**05.03.2008 Patentblatt 2008/10**

(73) Patentinhaber: **NORDEX Energy GmbH**
**22848 Norderstedt (DE)**

(72) Erfinder:
• **Nitzpon, Joachim**
**20255 Hamburg (DE)**
• **Woldmann, Thomas-Paul**
**21129 Hamburg (DE)**

(74) Vertreter: **Schildberg, Peter et al**
**Hauck Patent- und Rechtsanwälte**
**Neuer Wall 50**
**20354 Hamburg (DE)**

(56) Entgegenhaltungen:
EP-A- 0 635 639     EP-A- 1 283 359
DE-A1- 10 357 292     DE-A1- 19 955 586

**Beschreibung**

Die vorliegende Erfindung betrifft ein Verfahren zum Betrieb einer Windenergieanlage mit einem Synchrongenerator und einem Überlagerungsgetriebe.

Aus einem Übersichtsartikel "Drehzahlvariable Windkraftanlagen mit elektrisch geregeltem Überlagerungsgetriebe" von P. Caselitz et al., Konferenzbund "DEWEK "92", S. 171-175, wird der Einsatz elektrisch geregelter Überlagerungsgetriebe für den drehzahlvariablen Betrieb von Windkraftanlagen vorgestellt. Caselitz et al. erläutern, daß bei diesem Konzept die Drehzahlvariabilität nicht im elektrischen Teil sondern im mechanischen Teil der Anlage realisiert wird. Hierzu wird ein Überlagerungsgetriebe eingesetzt, wie es beispielsweise auch zur Leistungsverzweigung verwendet wird. Das Überlagerungsgetriebe besitzt eine dritte Welle, über die das Drehzahlverhältnis zwischen Rotor und Generator an der Windenergieanlage variiert werden kann. Der Zusammenhang zwischen den Drehzahlen der drei Wellen läßt sich wie folgt zusammenfassen:

$$i_1 \omega_R - i_2 \omega_C - \omega_G = 0 \ ,$$

wobei $i_1$ und $i_2$ konstruktiv vorgegebene Übersetzungsverhältnisse sind und $\omega_R$ die Drehzahl des Rotors, $\omega_C$ die Drehzahl an der dritten Welle des Überlagerungsgetriebes bezeichnet und $\omega_G$ die Generatordrehzahl. Zum Antrieb der dritten Welle des Überlagerungsgetriebes wird in der Regel ein elektrischer Antrieb eingesetzt. Die Verwendung einer stromrichtergespeisten Asynchronmaschine mit Käfigläufer wird von Caselitz et al. vorgeschlagen.

Aus der vorliegenden Gleichung ist direkt einsichtig, daß bei aufgeschaltetem Generator mit konstanter Drehzahl $\omega_G$ eine variable Rotorgeschwindigkeit $\omega_R$ (t), beispielsweise durch sich ändernde Windverhältnisse und andere Randbedingungen, durch eine Anpassung der Drehzahl an der dritten Welle ausgeglichen werden kann, wobei hier ein Drehmoment über die dritte Welle an den Generator geleitet oder von dem Rotor in die dritte Welle geleitet wird.

Aus DE 103 61 443 B4 ist eine Windenergieanlage bekannt, die einen drehzahlkonstanten, netzgekoppelten Generator aufweist. Zur Steuerung der Windenergieanlage im Teillastbereich ist ein Regler mit drei Regelungsebenen vorgesehen. In der ersten Regelungsebene wird die Eingangswelle eines Leistungsverzweigungsgetriebes von dem Windrotor angetrieben. In einem Leistungszweig ist ein hydrodynamischer Stellwandler mit Leitrad und Leitschaufeln vorgesehen. Ferner ist ein Reaktionsglied in einem Leistungszweig vorgesehen, das einen Leistungsrückfluß über den anderen Leistungszweig zum Leistungsverzweigungsgetriebe bewirkt. Als Vorteile diese Ausgestaltung einer Windenergieanlage wird eine verbesserte Regelung bei einer Windenergieanlage mit einem Überlagerungsgetriebe angegeben.

Aus DE 103 57 292 B4 ist ein Verfahren zur Steuerung des Antriebsstrangs einer Windenergieanlage mit Drehzahlführung bekannt, wobei die Drehzahlführung über ein Leistungsverzweigungsgetriebe und einen hydrodynamischen Stellwandler erfolgt. Der hydrodynamische Stellwandler umfaßt ein Pumpenrad, ein Turbinenrad und ein einstellbares Reaktionsglied und erlaubt so eine drehzahlgeführte Regelung der Windenergieanlage mit konstanter Drehzahl für den elektrischen Generator.

Aus EP 1 283 359 A1 ist eine Windenergieanlage mit einem Überlagerungsgetriebe bekannt. Die Regelwelle zur Einstellung des Übersetzungsverhältnisses an dem Überlagerungsgetriebe wird durch eine elektrische Maschine angetrieben, um eine Drehzahl an dem Generator konstant oder innerhalb eines bestimmten Intervalls zu halten. Die elektrische Maschine kann zu diesem Zwecke sowohl generatorisch als auch motorisch betrieben werden.

Der Erfindung liegt die Aufgabe zugrunde, ein Verfahren zum Betrieb einer Windenergieanlage bereitzustellen, das Störungen des Netzes und/oder eine Überbeanspruchung einzelner Triebstrangkomponenten beim Aufschalten des Synchrongenerators vermeidet.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zum Betreiben einer Windenergieanlage mit einem Synchrongenerator und einem Überlagerungsgetriebe. Das Überlagerungsgetriebe ist zwischen eine Rotorwelle und eine Generatorwelle geschaltet. Zusätzlich ist eine Antriebseinheit vorgesehen, über die ein Drehmoment von der Antriebseinheit auf die Generatorwelle geleitet werden kann. Erfindungsgemäß wird vor einem Aufschalten des Generators dieser von der Antriebseinheit angetrieben bis der Generator seine Nenndrehzahl erreicht hat. Erst nach Erreichen der Nenndrehzahl unter der möglicherweise erfolgten Feinjustierung der Nenndrehzahl wird der Generator auf das Netz geschaltet. Bei dem erfindungsgemäßen Verfahren erfolgt so ein sanftes Aufschalten, bei dem starke Störimpulse oder Spannungsänderungen vermieden werden.

In einer bevorzugten Ausgestaltung ist die Antriebseinheit mit dem Überlagerungsgetriebe gekoppelt. Zweckmäßigerweise kann die Antriebseinheit auch als Regeleinheit dienen, die im Betrieb die Drehzahl/Drehmomentenregelung übernimmt. Das Überlagerungsgetriebe ist in dieser Ausgestaltung mit der Rotorwelle als Eingangswelle und der Generatorwelle als Abtriebswelle verbunden, wobei die Antriebseinheit über eine zusätzliche Welle ein Drehmoment auf die Generatorwelle leiten kann.

In einer bevorzugten Weiterbildung steht der Rotor während des Aufschaltvorgangs. Wenn die Antriebseinheit auch als Regeleinheit dient und an die dritte Welle des Überlagerungsgetriebes angeschlossen ist, dann stützt sich der Steg des Überlagerungsgetriebes an dem Rotor ab, sodaß ein Drehmoment vorhanden ist.

In einer alternativen Ausgestaltung besitzt der Rotor während des Aufschaltens des Generators eine von Null verschiedene Drehzahl. Es kann also ein Drehmoment an der Rotorwelle und damit an der Eingangswelle des Überlagerungsgetriebes anliegen. Bei dieser Konstellation erfolgt bevorzugt eine Betriebsführung der Windenergieanlage, bei der die Drehzahl des Rotors konstant gehalten wird. Bei einer solchen Betriebsführung wird über die Antriebseinheit, die auch als Regeleinheit eingesetzt wird, lediglich das zum Erreichen der Nenndrehzahl fehlende Drehmoment durch das Überlagerungsgetriebe bereitgestellt. Alternativ ist es auch möglich, das an der Rotorwelle anliegende Drehmoment über das Überlagerungsgetriebe von der Generatorwelle zu entkoppeln und so den Generator vollständig über eine Antriebseinheit, die beispielsweise direkt an dem Generator gekoppelt ist, auf die gewünschte Nenndrehzahl zu bringen.

In einer bevorzugten Ausgestaltung steht der Rotor während des Aufschaltvorgangs. Alternativ ist es möglich, daß der Rotor während des Aufschaltvorgangs eine von Null verschiedene Drehzahl besitzt, aber leistungsfrei läuft. Dabei erfolgt bevorzugt eine Betriebsführung der Windenergieanlage, die den Rotor ansteuert, um die Drehzahl konstant zu halten.

In einer bevorzugten Ausgestaltung erfolgt unmittelbar vor dem Aufschalten des Generators eine Feinabstimmung der Generatordrehzahl, die Spannungsschwankungen im Netz vermeidet.

Die Erfindung wird nachfolgend anhand von Beispielen näher erläutert.

Es zeigt:

Fig. 1    eine schematische Ansicht einer Windenergieanlage mit Überlagerungsgetriebe,
Fig. 2    eine schematische Ansicht eines Überlagerungsgetriebes mit einer netzgespeisten Antriebseinheit,
Fig. 3    ein Überlagerungsgetriebe mit einem hydrostatischen Wandler und einem Hilfsmotor in Verbindung mit dem Synchrongenerator und
Fig. 4    ein Überlagerungsgetriebe mit einem hydrodynamischen Wandler und einem zusätzlichen Hilfsmotor in Verbindung mit dem Synchrongenerator.

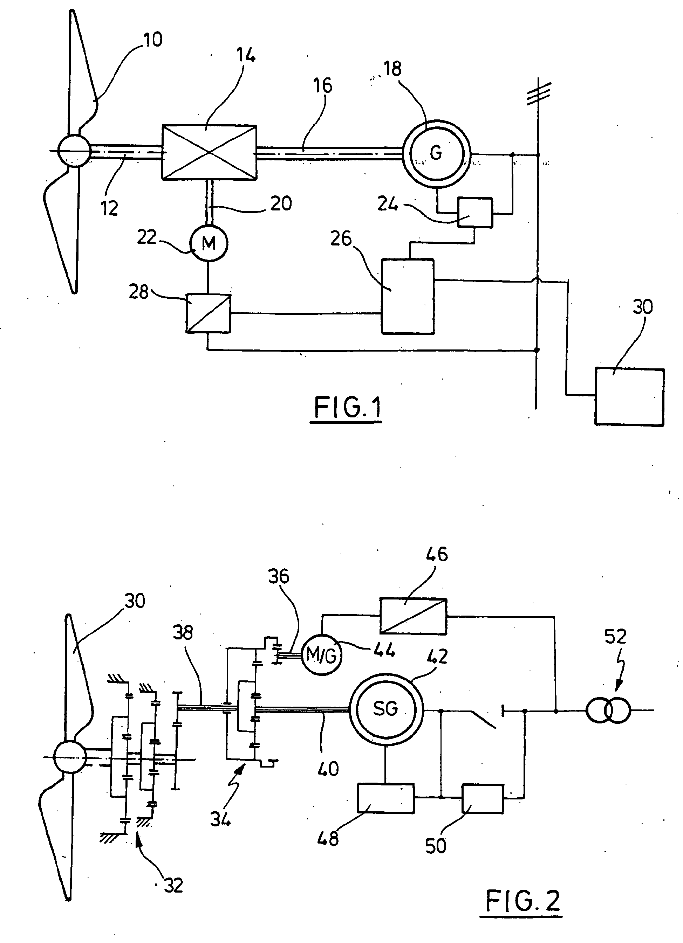

Fig. 1 zeigt einen Rotor 10, der ein Drehmoment aus dem Wind aufnimmt. Über seine Rotorwelle 12 wird das Drehmoment des Rotors 10 an ein Überlagerungsgetriebe 14 weitergeleitet. Das Überlagerungsgetriebe 14 besitzt eine Abtriebswelle 16, die mit einem Synchrongenerator gekoppelt ist. Die dritte Welle 20 des Überlagerungsgetriebes 14 ist mit einem Motor 22 gekoppelt.

Im Hinblick auf den Fluß der Drehmomente an dem Überlagerungsgetriebe gilt, daß das an dem Generator anliegende Drehmoment sich zusammensetzt aus dem in das Überlagerungsgetriebe 14 hineinfließende Drehmoment und das über die dritte Welle 20 zusätzlich eingebrachte Drehmoment des Motors 22 oder, in einem Spezialfall, das über die Welle 20 dem Überlagerungsgetriebe 14 entnommene Drehmoment. Bei letzterer Ausgestaltung wird das in das Überlagerungsgetriebe eintretende Drehmoment aufgeteilt.

Als Generator 18 ist ein Synchrongenerator vorgesehen, der mit einer Erregereinheit 24 verbunden ist. Nicht dargestellt, aber durchaus möglich ist ein Gleichstromzwischenkreis, über den die erzeugte Leistung ins Netz fließt.

Gesteuert werden sowohl der Motor 22 als auch die Erregereinheit 24 von einer zentralen Steuereinheit 26. Die Steuereinheit 26 steuert beispielsweise einen Stromrichter 28 für den Motor 22 an, um das entsprechende Moment/Drehzahl an das Überlagerungsgetriebe 14 anzulegen. Hierbei sind Motor und Stromrichter Bestandteile der Antriebseinheit. Auch die Erregereinheit 24 für den Synchrongenerator wird von der Steuereinheit 26 angesteuert. Das Energieversorgungsunternehmen, schematisch als 30 dargestellt, kann der Steuereinheit 26 entsprechende Steuersignale vorgeben.

Bei dem erfindungsgemäßen Verfahren wird der Synchrongenerator 18 vor einem Aufschalten der Windenergieanlage mit dem Netz synchronisiert. Hierzu wird die Generatorwelle über das Überlagerungsgetriebe mit dem Motor 22 angetrieben. Die Drehzahl wird hierbei erhöht, bis die Nenndrehzahl des Synchrongenerators erreicht ist. Der Rotor 10 stützt über den Steg die dritte Welle des Überlagerungsgetriebes 14 ab. Möglicherweise auftretende Drehzahlschwankungen entfallen, beispielsweise wenn der Rotor direkt festgesetzt und/oder direkt angebremst, also gehalten ist.

Figur 2 zeigt in einer schematischen Ansicht einen Rotor 30, dessen Welle mit einem Hauptgetriebe 32 gekoppelt ist. Das Hauptgetriebe 32 ist mit der Eingangswelle eines Überlagerungsgetriebes 34 gekoppelt. Das Überlagerungsgetriebe 34 besitzt eine Regelwelle 36, die von einem Elektromotor 44 angetrieben wird. Das dargestellte Überlagerungsgetriebe ist als ein dreiwelliges Planetengetriebe ausgebildet. Hierbei wirkt die Antriebswelle 38 auf den Steg. Die Abtriebswelle 40 entspricht der Sonnenwelle und das Hohlrad des Getriebes der Regelwelle 36. Die Abtriebswelle 40 ist drehzahlfest mit einem Synchrongenerator 42 verbunden. Die Regelwelle wird über den Motor 44 angetrieben, der über einen Frequenzumrichter 46 angesteuert wird. Hier sind Elektromotor 44 und Frequenzumrichter 46 Bestandteil der Antriebseinheit. Wie in Fig. 2 zu erkennen, kann der Elektromotor 44 auch generatorisch betrieben werden, sodass Leistung über die Regelwelle 36 an der elektrischen Maschine 44 in elektrische Leistung umgewandelt und über den Frequenzumrichter 46 in das Netz eingespeist wird. Die Regelwelle 36 stützt sich beim Aufschaltvorgang des Synchrongenerators an der Stegwelle ab und treibt den Generator 42 an.

Der Aufschaltvorgang erfolgt geregelt. Grundsätzlich kann der Aufschaltvorgang für jede beliebige Rotordrehzahl erfolgen. Der Rotor wird durch die Vorgabe eines Pitchwinkels abhängig von der Windgeschwindigkeit und der Böenintensität momentfrei in einem Drehzahlbereich gehalten. Bei Starkwind und/oder extrem böigen Wind kann es von Vorteil sein, beim Aufschaltvorgang des Synchrongenerators 42 den Rotor angebremst zu halten und erst nach erfolgreicher Synchronisation geregelt freilaufen zu lassen. Die Pitchregelung muß gewährleisten, dass die Antriebseinheit 44 beim Hochlaufen nicht überlastet wird.

Zum Aufschalten ist eine Synchronisationseinheit 50 vorgesehen, die Netzspannung und Generatorspannung miteinander vergleicht und den Frequenzumrichter 46 entsprechend ansteuert, um Generator und Netz miteinander zu synchronisieren. Der Synchrongenerator 42 wird über eine Erregereinheit 48 erregt. Synchronisationseinheit 50 und Erregereinheit 48 sind mit dem Netz gekoppelt.

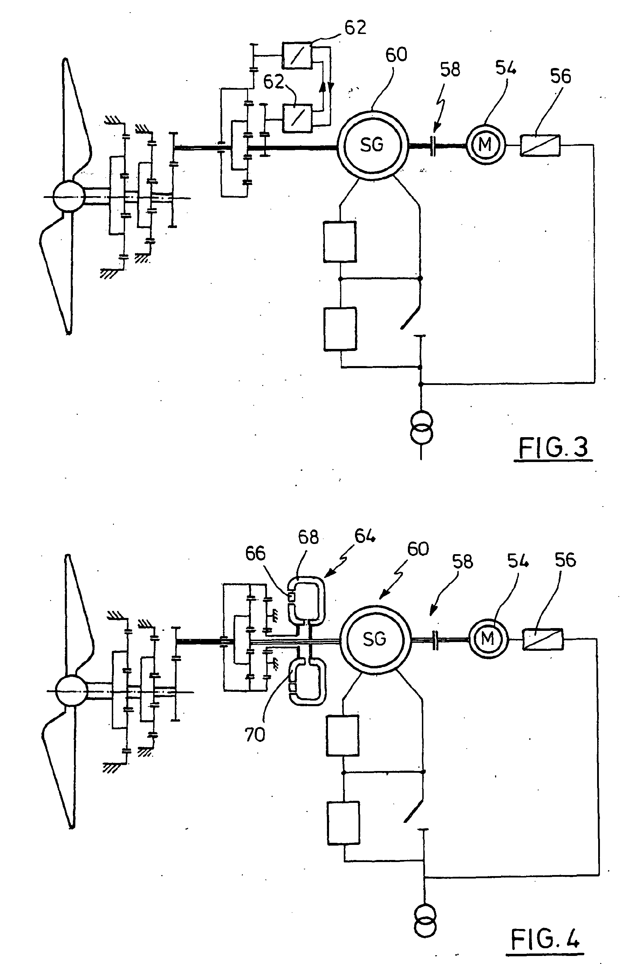

Figuren 3 und 4 zeigen Überlagerungsgetriebe mit einer eigenen Regelung, die es erlaubt, mit konstanter Drehzahl an der Generatorwelle zu arbeiten. Angetrieben wird der Synchrongenerator über einen Hilfsmotor 54, der über einen Frequenzumrichter angesteuert wird. Der Hilfsmotor 54 kann beispielsweise aus einem Asynchronmotor bestehen, der mit einem drehzahlgeregelten Frequenzumrichter 56 angetrieben wird. Der Hilfsmotor 54 ist über eine schaltbare Kupplung 58 mit dem Generator 60 verbunden. Die schaltbare Kupplung 58 wird nur zur Synchronisation des Synchrongenerators 60 geschlossen und ist im Betrieb der Anlage geöffnet (Abbildung).

In einer weiteren Ausführungsform entfällt die Kupplung und der Hilfsmotor ist direkt mit dem Synchrongenerator über eine starre Welle verbunden und wird vollständig elektrisch getrennt vom Netz mit dem Synchrongenerator betrieben.

Die Regelung der Drehzahl erfolgt in Figur 3 und 4 durch einen hydraulischen Verstellantrieb, der zwischen Abtriebswelle und Regelwelle vorgesehen ist. Figur 3 zeigt einen hydrostatischen Antrieb, der gesteuert wird, um bei konstanter Drehzahl der Abtriebswelle Änderungen in der Drehzahl oder im Drehmoment an der Antriebswelle des Überlagerungsgetriebes auszugleichen. Der Ausgleich erfolgt beispielsweise durch die Volumenströme an den Hydrostaten 62.

Der in Figur 4 dargestellte Drehmomentwandler 64 verfügt über ein Leitrad 66, das durch seine Verstellung eine Wandlung der Drehzahl/Drehmomente hervorruft. Der Wandler 64 besteht neben dem Leitrad 66 aus einem Pumpenrad 68 und einem Turbinenrad 70. Zur Übertragung von Leistung zwischen der Abtriebswelle und der Regelwelle ist der Wandler mit Öl gefüllt. Das dabei auf das Hohlrad des Überlagerungsgetriebes aufgebrachte Drehmoment ermöglicht die Leistungsübertragung zwischen An- und Abtriebswelle im Überlagerungsgetriebe.

**Patentansprüche**

1. Verfahren zum Betreiben einer Windenergieanlage mit einem Synchrongenerator (18), einem Überlagerungsgetriebe (14), das zwischen Rotorwelle (12) und Generatorwelle (16) geschaltet ist, und einer Antriebseinheit,
**dadurch gekennzeichnet, daß**
vor einem Aufschalten des Synchrongenerators (18) auf das elektrische Netz die Antriebseinheit den Synchrongenerator antreibt bis dieser seine Nenndrehzahl erreicht hat.

2. Verfahren nach Anspruch 1, **dadurch gekennzeichnet, dass** die Antriebseinheit über das Überlagerungsgetriebe den Generator antreibt.

3. Verfahren nach Anspruch 2, **dadurch gekennzeichnet, daß** die Antriebseinheit einen elektrischen Motor aufweist.

4. Verfahren nach einem der Ansprüche 1 bis 3, **dadurch gekennzeichnet, daß** vor dem Aufschaltvorgang die Rotorwelle über das Überlagerungsgetriebe von der Generatorwelle (16) entkoppelt ist.

5. Verfahren nach Anspruch 1 bis 4, **dadurch gekennzeichnet, daß** der Rotor während des Aufschaltens des Generators leistungsfrei läuft oder steht.

6. Verfahren, nach Anspruch 1 bis 4, **dadurch gekennzeichnet, daß** der Rotor während des Aufschaltens des Generators leistungsfrei mit einer von Null verschiedenen Drehzahl läuft.

7. Verfahren nach Anspruch 6, **dadurch gekennzeichnet, daß** eine Steuereinheit der Windenergieanlage den Rotor ansteuert, um die Rotordrehzahl zu regeln.

8. Verfahren nach einem der Ansprüche 1 bis 7, **dadurch gekennzeichnet, daß** die Antriebseinheit angesteuert wird, um die von dem Generator erzeugte Spannung mit der Spannung im Netz zu synchronisieren und die Generatorfrequenz gleich der Netzfrequenz zu halten.

9. Verfahren nach einem der Ansprüche 1 bis 8, **dadurch gekennzeichnet, daß** die Antriebseinheit einen Hilfsmotor (54) aufweist, der über eine Kupplung (58) mit dem Synchrongenerator gekoppelt ist.

10. Verfahren nach einem der Ansprüche 1 bis 8, **dadurch gekennzeichnet, daß** die Antriebseinheit einen Hilfsmotor (54) aufweist, der direkt mit dem Synchrongenerator gekoppelt ist.

## Claims

1. A method for the operation of a wind energy plant, with a synchronous generator (18), a superimposition gearbox (14), which is connected between rotor shaft (12) and generator shaft (16), and a drive unit, **characterised in that** before connecting the synchronous generator (18) to the electric grid, the drive unit drives the synchronous generator until the same has reached its rated rotational speed.

2. A method according to claim 1, **characterised in that** the drive unit drives the generator via the superimposition gearbox.

3. A method according to claim 2, **characterised in that** the drive unit has an electric motor.

4. A method according to any one of claims 1 to 3, **characterised in that** before the connecting process, the rotor shaft is uncoupled from the generator shaft (16) via the superimposition gearbox.

5. A method according to any one of claims 1 to 4, **characterised in that** the rotor runs power-free or stands still during the connecting operation of the generator.

6. A method according to any one of claims 1 to 4, **characterised in that** the rotor runs power-free with a rotational speed different from zero during the connecting operation of the generator.

7. A method according to claim 6, **characterised in that** a control unit of the wind energy plant controls the rotor in order to control the rotor rotational speed.

8. A method according to any one of claims 1 to 7 **characterised in that** the drive unit is controlled to synchronise the voltage generated by the generator with the voltage in the grid, and to keep the generator frequency equal to the grid frequency.

9. A method according to any one of claims 1 to 8, **characterised in that** the drive unit has an auxiliary motor (54), which is coupled to the synchronous generator via a clutch (58).

10. A method according to any one of claims 1 to 8, **characterised in that** the drive unit has an auxiliary motor (54), which is directly coupled to the synchronous generator.

## Revendications

1. Procédé destiné au fonctionnement d'une éolienne avec un générateur synchrone (18), un engrenage de superposition (14) qui est couplé entre l'arbre de rotor (12) et l'arbre de générateur (16), et avec une unité d'entraînement, **caractérisé en ce que** avant la connexion du générateur synchrone (18) au réseau de distribution électrique, l'unité d'entraînement entraîne le générateur synchrone jusqu'à ce que celui-ci a atteint sa vitesse de rotation nominale.

2. Procédé selon la revendication 1, **caractérisé en ce que** l'unité d'entraînement entraîne le générateur via l'engrenage de superposition.

3. Procédé selon la revendication 2, **caractérisé en ce que** l'unité d'entraînement a un moteur électrique.

4. Procédé selon l'une quelconque des revendications 1 à 3, **caractérise en ce que** l'arbre de rotor est découplé de l'arbre de générateur (16) via l'engrenage de superposition avant le processus de connexion au réseau.

5. Procédé selon l'une quelconque des revendications 1 à 4, **caractérise en ce que** le rotor se tourne sans débit ou ne se tourne pas du tout pendant la connexion du générateur au réseau.

6. Procédé selon l'une quelconque des revendications 1 à 4, **caractérise en ce que** le rotor se tourne sans débit avec une vitesse de rotation différente de zéro pendant la connexion du générateur au réseau.

7. Procédé selon la revendication 6, **caractérisé en ce que** une unité de commande de l'éolienne commande le rotor afin de réguler la vitesse de rotation du rotor.

8. Procédé selon l'une quelconque des revendications 1 à 7, **caractérise en ce que** l'unité d'entraînement est commandée afin de synchroniser la tension produite par le générateur avec la tension dans le réseau de distribution, et de tenir la fréquence du générateur égale à la fréquence du réseau.

9. Procédé selon l'une quelconque des revendications 1 à 8, **caractérise en ce que** l'unité d'entraînement a un moteur auxiliaire (54) qui est couplé au générateur synchrone via un embrayage (58).

10. Procédé selon l'une quelconque des revendications 1 à 8, **caractérise en ce que** l'unité d'entraînement a un moteur auxiliaire (54) qui est directement couplé au générateur synchrone.

FIG.1

FIG.2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361443 B4
- DE 10357292 B4
- EP 1283359 A1

**In der Beschreibung aufgeführte Nicht-Patentliteratur**

- **P. CASELITZ et al.** Drehzahlvariable Windkraftanlagen mit elektrisch geregeltem Überlagerungsgetriebe. *Konferenzbund ''DEWEK ''92,* 171-175